# EUROPEAN PATENT APPLICATION

(11) **EP 1 179 785 A1**
(43) Date of publication of application: **13.02.2002**
(21) Application number: 00830564.1
(22) Date of filing: 07.08.2000
(51) Int. Cl.: G06F 13/40

(54) **Bus interconnect system**

(71) Applicant: STMicroelectronics S.r.l., 20041 Agrate Brianza (Milano) (IT)
(72) Inventor: Butta', Pasquale, 98100 Messina (IT); Reitano, Giuseppe, 95125 Catania (IT)
(74) Representative: Bosotti, Luciano

(57) **Abstract**

An interconnect system (SI) adapted for acting as a data path for transferring data fields on a bus between a plurality of initiators (I1, I2) and targets (T1, T2) operates in such a way that each data field is transferred during a respective cycle of a corresponding clock signal. The system is configured (10, 11) in such a way that the said data fields are divided into a first and a second part. Similarly, the cycle of the clock signal is divided into a first and a second part. The first and the second part of each data field are transferred, respectively, during the first and the second part of the cycle of the clock signal. Data fields having a size of 128 bits, for example, can thus be transferred on a 64-bit data path structure without any negative effect on the system performance and without the necessity of increasing the clock frequency; this facilitates the integration of the system on a chip.

## Description

### Technical field

The present invention relates to systems known as "interconnect systems" for buses.

These systems form the basis for all superintegrated devices based on the use of buses, such as the cores of CPUs and similar devices.

These systems are based on the use of physical communication. infrastructures with a high level of integration on which a packet transaction protocol is superimposed.

### Description of the prior art

The possibility of forming a system on a single chip ("System on a chip") in the context of interconnect systems for buses is mainly a result of the possibility of integrating a wide variety of system components with markedly different characteristics of bandwidth and latency.

Another of the fundamental reasons for considering system integration is related to cost. This is because it is imperative that the overheads due to the system integration should not exceed the intrinsic costs of the system or systems which are to be replaced with this approach. The complexity of the interface varies as a function of the type and capabilities of the module, and also a function of the corresponding subset of interconnection characteristics.

In this context, a first solution provides for the association of each initiator (in other words, each element of the system which can initiate a transaction) and each target (in other words, each element of the system which can be the subject of an access request from an initiator) with a corresponding interface leading to a corresponding connection (port).

In this type of configuration, which can be described as a peripheral interface, the transaction can be broken down into the transmission of a request packet organized in cells of n bytes and the reception of a response packet organized in cells of n bytes. Each new cell of the transmission packet can be sent only after the reception of the response cell associated with the cell transmitted previously. The total duration of the transmission of a cell corresponds to the sending of the request signal (req) by the initiator.

For the transmission of each cell, the initiator sends a first part of its opc, add (add1), be (be1) and data (d1) signals, on which a first fraction of the response signals (r_req, r_opc and r_data (rd1)) is superimposed temporally in the second portion of the cell.

The final cell of the packet is identified by the initiator's sending of the eop signal and the second fraction of the corresponding opc, add (add2), be (be2) and data (d2) signals, on which the second fractions r_req, r_opc and r_data (rd2) of the response signals are superimposed, again in the final part of the cell.

This type of interface, which is simple on the whole, is capable of supporting a subset of the whole set of transactions. It is designed for modules with a low or reduced data transmission rate, without particular requirements in terms of division (splitting) of the transactions and/or of extended or complicated operations.

This has led to the development of interfaces of a more advanced type, capable of supporting the division (splitting) of the transactions at the level of the peripheral interface.

In a first solution, all the request/response packets are symmetrical and the system sets the order of all the operating sequences in the module.

This solution can be extended in such a way as to produce an asymmetrical distribution of the request/response packets, with full error support.

In this solution, the system is also capable of making the requirements for ordering the request/response packets less restrictive, so that the individual modules can benefit from the possibility of concurrent working in the context of the operation of the system.

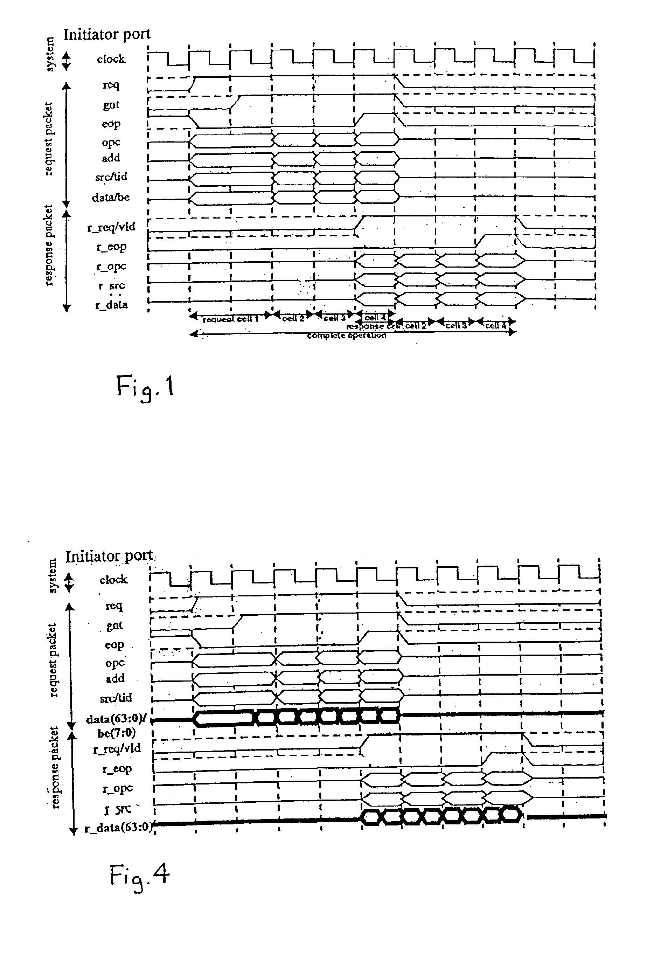

The operating mode of these more advanced interfaces is shown schematically in the timing diagram of Figure 1, in which the upper diagram represents the clock signal generated by the system and the lower diagrams are grouped into two sets corresponding to the request packets and to the response packets respectively.

The meaning of the symbols identifying each diagram within the timing diagram of Figure 1 (which, it will be remembered, represents the prior art) is well known to those skilled in the art and therefore does not need to be described in detail in this document. It will be appreciated, in particular (see the indications in the lower part of the timing diagram) that this operating mode also makes it possible to achieve a degree of interlacing or temporal overlap between the request cells and the response cells within the overall operation.

### Objects and summary of the invention

The object of the present invention is to provide an interconnect system solution which is an improvement of the solutions described above. This relates, in particular, to the possibility of integration on a single chip.

In this context, it should be remembered that an interconnect system is essentially a set of nodes, which implement the arbitration function, and what is known as a data path, which implements the routing function, in other words the selection of a path for sending the data between the initiators (IP) and the targets, which are intended to operate, respectively, as master modules and slave modules within the system. Clearly, this is done with reference to the individual transaction, since, theoretically at least, one or more of the modules in the system is usually capable of acting as both initiator and target.

In high-performance systems, the implementation of the data path is rather difficult. This is because the interface protocol causes the transfer at the maximum rate of one cell of data per clock cycle per target. Therefore, the size of the data path has a considerable effect in terms of the integration area on the chip, and slows down the transfer between the initiator and target.

The object of the solution according to the invention is to overcome this intrinsic limitation.

According to the present invention, this object is achieved by means of an interconnect system having the characteristics claimed in a specific way in the following claims.

To summarize, the solution according to the invention is based on the transfer of the same quantity of data during a clock cycle, and is implemented by dividing the bus data into two parts and transferring the first half of the data into the first part (part 1) of the clock cycle and the remaining part into the second part (cycle-part 1) of the clock cycle.

With this type of method, which can essentially be called a double or doubled rate method, an interface system which can be integrated in a single chip can be produced, without negative effects on performance and without increasing the clock frequency.

In general terms, the solution according to the invention has a certain affinity with the technique currently called DDR, i.e. Dual Data Rate, but this is conventionally applied outside the system, and not to the internal interfaces of the system.

### Detailed description of the drawings

The invention will now be described, purely by way of example and without restrictive intent, with reference to the attached drawings, in which:
- Figure 1, described above, is a timing diagram representing the operation of the interconnect systems according to the prior art;
- Figure 2 shows in a schematic way the general function of an interconnect system;
- Figure 3 shows in greater detail the operating principles of an interconnect system according to the invention;
- Figure 4 is a timing diagram which shows, in ways essentially similar to that used in Figure 1, the operating principles of the solution according to the invention.

### Detailed description of a preferred embodiment of the invention

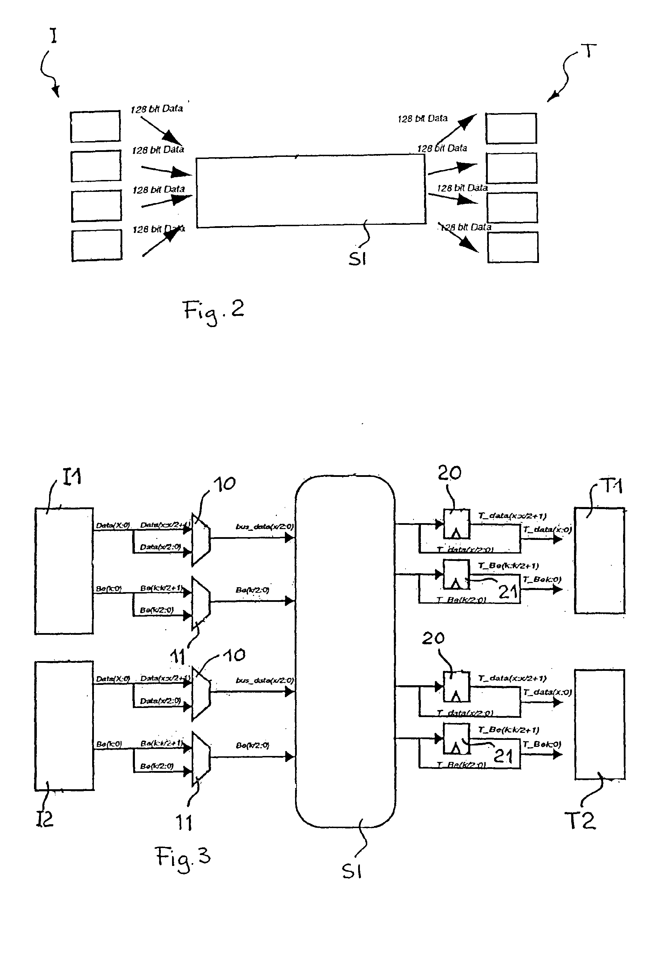

In Figure 2, an interconnect system SI according to the invention is illustrated in its typical configuration of interaction between a set of initiators I designed to selectively access a plurality of targets T in such a way as to implement transactions essentially corresponding to the transfer of data between the initiator I and the target T.

Essentially, the interconnect system SI identifies a set of nodes which implement the arbitration function (the selective granting of access to corresponding targets for initiators requesting it, according to corresponding priorities and/or other parameters on which the arbitration function is based), and the data path function, in other words that which implements the routing function between the initiators I and the targets T, which act, respectively, as masters and slaves.

The implementation of the data path function is difficult, particularly for high-performance systems which require the implementation of a wide-band interconnection function. For example, in the illustrated embodiment (which is not to be interpreted as limiting the scope of the invention) the size of the data field of the data path is 128 bits.

The size of the data path can have a negative effect in respect of the optimization of the area in an integrated system on a single chip.

It is also important to avoid producing a negative effect on the performance of the system by increasing the transmission delay between the initiator and target. In this respect, it should be remembered that the protocols designed to control the operation of the interfaces in interconnect systems (in the STBUS system, for example) usually require the transfer at the maximum rate of one data cell per clock cycle to each target (see the diagram in Figure 1).

However, the solution according to the invention is designed to reduce the complexity of the data path without producing a negative effect on the performance of the system (and without increasing the clock frequency). This is done by transferring the same quantity of data within one clock cycle, but dividing the sizes of the data buses by two, and then transferring the first half of the data in the first half of the clock cycle and the remaining part in the second half of the clock cycle.

This operating mode is illustrated in the timing diagram of Figure 4 which, as will immediately be appreciated, is essentially identical to the timing diagram of Figure 1 except for the different organization of the two data transfer diagrams (data/be and r_data).

A comparison of these diagrams will make it immediately evident that the cells are divided into two parts, both in the request section and in the response section.

The procedures for implementing the solution according to the invention are further illustrated with reference to the diagram in Figure 3, which, for simplicity of illustration, relates to an interconnect system configuration designed to operate between two initiators I1, I2 and two targets T1, T2.

Each data packet is divided into two parts in the initiators I1 and I2. Although the division could theoretically be different, the two parts are usually identical, in other words forming two halves: this solution appears preferable for reasons of symmetry.

A similar splitting to that of the data packets is applied to the signal be.

All this is done for the purpose of transmission on the interconnect system SI in two successive time intervals (reference should again be made to the timing diagram in Figure 4) corresponding to the first and the second part of the clock cycle (see the diagram in the upper part of the figure).

The units 10 and 11 represent, in a deliberately schematic way, the action of successive sending of the two parts of the individual data packets and of the signal be.

It will be appreciated that it is thus possible to transmit, for example, data fields of 128 bits in the form of two successive blocks of 64 bits (63:0) while using a structure which is identical for all purposes to that of a 64-bit data path. The right-hand side of Figure 3 shows the operation of reconstructing the signals data and be, for transmission to the targets T1 and T2. This is done by means of modules 20, 21 which in practice are equivalent to registers which temporarily store part of the data field (and of the signal be) while the other part is being received, for the purpose of transmission to the targets T1, T2 which are involved at different times.

Naturally, provided that the principle of the invention is retained, the details of implementation and the forms of embodiment can be varied widely from those described and illustrated, without thereby departing from the scope of the present invention as defined by the attached claims. This is particularly true in relation to the term "data". This term has, clearly, been used here in its widest meaning of "information in numerical form", without regard to the specific information content of the data (which, for example, may clearly consist of addresses, etc.).

## Claims

1. Interconnect system adapted for acting as a data path for transferring data fields on a bus between a plurality of initiators (I) and targets (T), the transfer of each data field being carried out during a corresponding cycle of a clock signal, **characterized in that** the system is configured (10, 11) to divide the said data fields into a first and a second part and the said cycle of the clock signal into a corresponding first and second part, and to transfer the said first and the said second parts of the data fields, respectively, during the said corresponding first and the said corresponding second part of the cycle of the said clock signal.

2. System according to Claim 1, **characterized in that** the said first and the said second part of the said data fields are equal to each other.

3. System according to Claim 1 or Claim 2, **characterized in that** the said corresponding first and the said corresponding second part of the clock signal are of equal duration.

4. System according to any one of the preceding claims, **characterized in that** the said data path has a data field size equal to half of the said data field.

5. System according to any one of the preceding claims, **characterized in that** the said data field has a length of 128 bits.

6. System according to any one of the preceding claims, **characterized in that** it is integrated on a chip.
